## Europäisches Patentamt
## European Patent Office
## Office européen des brevets

(19)

(11) Veröffentlichungsnummer: **0 459 352 B1**

(12)

# EUROPÄISCHE PATENTSCHRIFT

(45) Veröffentlichungstag der Patentschrift: **01.03.95**

(51) Int. Cl.⁶: **F16H 1/22**

(21) Anmeldenummer: **91108582.7**

(22) Anmeldetag: **27.05.91**

(54) **Verzweigungsgetriebe.**

(30) Priorität: **29.05.90 DE 4017226**

(43) Veröffentlichungstag der Anmeldung:
**04.12.91 Patentblatt 91/49**

(45) Bekanntmachung des Hinweises auf die
Patenterteilung:
**01.03.95 Patentblatt 95/09**

(84) Benannte Vertragsstaaten:
**CH DE FR GB LI**

(56) Entgegenhaltungen:
| | |
|---|---|
| EP-A- 0 211 090 | DE-A- 1 650 857 |
| DE-B- 1 149 958 | FR-A- 1 423 682 |
| GB-A- 159 028 | GB-A- 918 241 |
| US-A- 1 898 198 | |

(73) Patentinhaber: **BHS-VOITH GETRIEBETECHNIK GmbH**
**Hans-Böckler-Strasse 7**
**D-87527 Sonthofen (DE)**

(72) Erfinder: **Heidrich, Günther**
**Ortwang Nr. 38**
**W-8978 Burgberg (DE)**

(74) Vertreter: **Schieschke, Klaus, Dipl.-Ing.**
**Patentanwälte Dipl.-Ing. E. Eder**
**Dipl.-Ing. K. Schieschke**
**Elisabethstrasse 34**
**D-80796 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verzweigungsgetriebe, insbesondere für große Leistungen und/oder hohe Drehzahlen, mit je einem zentralen Sonnenrad, welche einerseits mit jeweils einer Welle einer An- und Abtriebsmaschine verbunden und andererseits über mindestens drei, gleichmäßig über den Umfang verteilte, durch eine Kupplung verbundene Doppelverzweigungsräder miteinander gekoppelt sind.

Die Tendenz zu immer größeren Leistungen und Drehzahlen der Kraft- und Arbeitsmaschinen erfordert für Zahnradgetriebe neue Bauarten, um diese erhöhten Anforderungen erfüllen zu können.

Die dabei entstehenden Schwierigkeiten resultieren vor allem aus den hohen Drehzahlen und der Größe derartiger Getriebe. Das Ausmaß dieser dynamischen Probleme wird besonders deutlich durch die zu beherrschenden Umfangsgeschwindigkeiten, welche bei den Verzahnungen größer als 200 m/s und bei anderen Bauteilen teilweise bis 300 m/s sein können.

Als Stand der Technik ist, nach dem Oberbegriff des Anspruchs 1, bereits ein zweistufiges Verzweigungsgetriebe mit koaxialen Antriebs- und Abtriebswellen, zwei Sonnenrädern und feststehendem Steg bekannt (DE-AS 1 149 958). Bei dieser bekannten Konstruktion wird ein Ausgleich der unvermeidbaren Herstellungs- und Verzahnungsfehler und damit eine gleichmäßige Leistungsverteilung dadurch zu erreichen versucht, daß die Einzelräder der Doppelverzweigungsräder durch Kupplungszähne drehstarr miteinander verbunden sind, wobei ein Doppelverzweigungsrad axial geführt ist und die Einzelräder der anderen Doppelverzweigungsräder axial beweglich sind.

Des weiteren sind getrennt hergestellte Kupplungsringe vorgesehen, welche nach Durchführung der statischen Zahnflankeneinstellung mit den Einzelrädern verschraubt und verstiftet werden.

Diese Ausführungsart erfordert eine umständliche Gesamtmontage. Es ist hierzu notwendig, die beiden Radsätze zunächst einmal nur provisorisch zu montieren, die Zahnräder auf Flankenkontakt einzustellen und danach die Radsätze wieder auseinanderzunehmen, um die Kupplungsringe nach den auszuführenden Nacharbeiten an den Einzelrädern in der zuvor bestimmten Stellung befestigen zu können.

Trotz dieser umfangreichen Maßnahmen ist ein vollkommener Fehlerausgleich während des Laufes beim Abrollen der Zahnräder nicht zu erreichen, da die Fehler sich unregelmäßig über den Radumfang verteilen und zudem noch von unterschiedlicher Größe sind. Ein gleichmäßiger Zahnkontakt bei allen vorkommenden Zahnstellungen ist bei diesem bekannten Getriebe nicht möglich.

Außerdem sieht diese Konstruktion vor, die axiale Selbsteinstellung der doppelschrägverzahnten Getrieberäder dadurch zu ermöglichen, daß die unter Drehmoment belasteten Zähne der Zahnkupplung sich axial gegeneinander verschieben. Um dies zu erreichen, muß der Reibungswiderstand zwischen den Zahnflanken der Zahnkupplung überwunden werden, wobei die Höhe des Reibungswiderstandes von dem Drehmoment und der jeweils vorhandenen Reibungszahl abhängig ist.

Die Praxis zeigt, daß in derartigen Fällen mit zunehmender Betriebszeit eine Erhöhung der Reibungszahl eintritt. Bei einer stark erhöhten Reibungszahl kann dies schließlich zum Blockieren der Kupplung führen.

Als weiterer großer Nachteil kommt hinzu, daß Doppelschrägverzahnungen, außer durch die Kräfte aus dem Drehmoment, durch diesen Reibungswiderstand zusätzlich beansprucht werden. Dies hat zur Folge, daß bei der Radsatzauslegung die Zusatzbeanspruchung zu berücksichtigen ist, was wiederum zu einer Vergrößerung derartiger Getriebe führt.

Außerdem erlaubt es die ungenügende Gelenkigkeit einer einfachen Zahnkupplung nicht, daß sich die Einzelräder, ohne sich gegenseitig zu beeinflussen, auf gleichmäßiges Flankentragen entlang der Zahnbreite einstellen können.

Erschwert wird diese Tatsache noch dadurch, daß die auf die beiden Einzelräder wirkenden tangentialen Zahnkräfte entgegengesetzt gerichtet sind. Es entsteht damit ein ebenfalls entgegengesetzt gerichteter Versatz der beiden Einzelräder, im Rahmen dessen, was die vorhandenen Lagerspiele zulassen. Dieser Versatz führt bei der Anordnung von nur einer einfachen Zahnkupplung als Verbindungselement zwischen den Verzweigungsrädern zwangsweise zu einem Schrägstellen dieser Räder und damit zu einem einseitigen schädlichen Flankentragen.

Durch die Anordnung von Zahnkupplungen als Verbindungselement bei den Baugruppen der Sonnen- und Verzweigungsräder ist es weiterhin von großem Nachteil, daß diese Baugruppen nicht im montierten Zustand ausgewuchtet werden können. Hauptursache sind dafür die im Stillstand und bei Rotation vorhandenen Spiele. Zu diesen Spielen gehören das Flankenspiel, das Zentrierungsspiel und die Vergrößerung dieser Spiele durch die größere Aufweitung des äußeren, größeren Teiles gegenüber dem inneren, kleineren Teil.

Dieser Nachteil ist besonders groß bei sehr hohen Drehzahlen. Die dabei auftretenden Unwuchtkräfte können dann leicht Größen erreichen, die zu einer ernsten Gefahr für das Getriebe, aber auch für den gesamten Maschinensatz werden, beispielsweise Verschleiß und Fressen der Zähne, Lagerschäden, Wellenbrüche.

Beim Einsatz von Doppelverzweigungsrädern führt die drehstarre Verbindung der Einzelräder mittels Zahnkupplung außerdem auch noch zu dem Nachteil, daß trotz der Selbsteinstellung der Sonnenräder eine Leistungsverzweigung auf mehr als drei Verzweigungsstränge infolge fehlender Elastizitäten nicht möglich ist und somit größere Getriebe wiederum die Folge sind.

Weiterer bekannter Stand der Technik ist ein Mehrweggetriebe für große Leistungen (DE-PS 1 650 857) mit der Problemlösung, bei Doppelverzweigungsrädern den durch die Zahnkräfte entgegengesetzt gerichteten Versatz der Einzelräder auszugleichen. Außerdem soll der Einfluß der unvermeidbaren Herstellungs- und Verzahnungsfehler während des Betriebes weiter verringert werden, und zwar bei möglichst kleinem räumlichen und baulichen Aufwand. Als Verzahnung ist hierbei Einfachschrägverzahnung mit Druckkamm vorgesehen.

Bei dieser bekannten Ausführung wird vorgeschlagen, den Fehlerausgleich während des Betriebes durch die Drehelastizität der geschlitzten Kupplungshülse zu erreichen.

Um ein derart gestaltetes Getriebe montieren zu können, ist es bei der Herstellung der Verzahnungen erforderlich, daß die Lage der Laufverzahnungen zu den Kupplungsverzahnungen der Doppelverzweigungsräder bei allen Verzweigungssträngen genau gleich ist. Diese Forderung ist jedoch herstellungstechnisch nur mit großen Aufwand zu erfüllen.

Ein weiteres konstruktives Merkmal dieser bekannten Konstruktion ist, daß die axiale Führung der Radsätze an den Sonnenrädern über Anschlagringe starr erfolgt. Hierdurch ergeben sich unerwünschte Zusatzbeanspruchungen an den Verzahnungen.

Des weiteren beinhaltet dieses bekannte Getriebe durch den Einsatz von Zahnkupplungen an den Sonnen- und Doppelverzweigungsrädern zum Teil die gleichen Nachteile wie bei der Konstruktion nach der DE-AS 1 149 958. Es sind dies: Reibungswiderstände in den Zahnkupplungen bei Axialbewegungen und damit Zusatzbeanspruchungen an den Verzahnungen und Druckkämmen sowie weitere dynamische Mehrbelastungen durch verringerte Auswuchtgüte als Folge der nicht durchführbaren Komplettwuchtung der Baugruppen der Sonnen- und Doppelverzweigungsräder.

Weiterer Stand der Technik ist ein Stirnräder-Planetengetriebe mit selbsttätigem Zahndruck-Ausgleich (DE-AS 1 173 305). Hierbei handelt es sich ausschließlich um reine Planetengetriebe in ein- und zweistufiger Bauart. Nach der Aufgabenstellung ist ein Stirnräder-Planetengetriebe zu schaffen, welches weniger aufwendig, leichter und billiger zu bauen ist. Diese Bauarten sind für höhere Leistungen und Drehzahlen nicht geeignet.

Ein weiteres Hindernis zur Erzielung höherer Leistung und Drehzahlen in den bekannten Konstruktionen stellen die verwendeten Kupplungsarten dar. Alle diese Bauarten sind nur für langsame bzw. mittlere Drehzahlen geeignet. Beispielsweise sind bei Feder-Lamellenkupplungen Umfangsgeschwindigkeiten von ca. 40 m/s gerade noch ausführbare Maximalwerte.

Zur Lösung der vorgenannten Aufgabe wird außerdem u. a. ein zweistufiges Planetengetriebe vorgeschlagen, bei dem der Planetenträger der ersten Stufe mit dem Sonnenrad der zweiten Stufe über eine Schraubenfederkupplung oder eine Biegeweiche, axial starre Welle oder eine drehsteife Feder-Lamellenkupplung verbunden ist.

Weiterhin ist ein Zahnrädergetriebe mit unterteilten Rädern bekannt (DE-PS 370 961). Hier bestand die Aufgabe darin, bei Pfeilrädern ein gleichmäßiges, genaues Anliegen und Tragen der Zähne der beiden Pfeilhälften untereinander zu erreichen. Die Pfeilhälften sind dazu in je zwei Lagern geführt und über eine eingelenkige Membrankupplung verbunden, ohne daß ein axiales Verschieben oder Verdrehen der Teile gegeneinander möglich ist. Darüber hinaus soll die Kupplung ein Schiefstellen der Achsen der Getriebteile erlauben.

Zusätzlicher Stand der Technik ist eine Anlaufscheibenanordnung, insbesondere für Planetenräder in einem Planetenträger (DE-PS 3 622 671). Sie besteht aus innen- und außenliegenden Anlaufscheiben, welche mit Ausnehmungen zur Schmierölversorgung der Lageranordnung versehen sind. Es soll hierdurch auch bei hohen Drehzahlen der Planetenräder eine absolut zuverlässige Schmierung und Kühlung von mit halber Drehzahl umlaufenden Nadeln einer Nagellageranordnung erzielt werden.

Zum weiteren bekannten Stand der Technik zählt eine Verbindung der Welle der Abtriebsmaschine mit einem Verzweigungsgetriebe über eine Membrankupplung (GB-A-918 241). Die Abtriebswelle ihrerseits ist über eine weitere Membrankupplung mit dem Innenteil eines großen Zentralrades verbunden, das seinerseits mit Planetenrädern kämmt. Hierdurch soll eine axiale Selbsteinstellung der doppelschrägverzahnten Getrieberäder bewirkt werden. Die gesamte Konstruktion ist jedoch so aufgebaut, daß zwangsläufig hohe Kräfteübertragungen nicht möglich sind.

Demgegenüber besteht die Aufgabe der vorliegenden Erfindung darin, ein Verzweigungsgetriebe der eingangs genannten Art so zu gestalten, daß ohne großen Bau- und Kostenaufwand große Leistungen und hohe Drehzahlen erreicht werden können.

Diese Aufgabe wird erfindungsgemäß gelöst mit den Merkmalen im kennzeichnenden Teil des Anspruchs 1.

Hierdurch ergibt sich der Vorteil, daß die hohe Elastizität, d.h., niedrige Federsteife der Membrankupplungen bei den Sonnen- und Doppelverzweigungsrädern kleine Widerstände bei den Einstellbewegungen (radial, axial) auf gleiche Leistungsverzweigung und bei den Ausgleichsbewegungen bei Wellenversatz (radial, axial) ergibt. Dies bedeutet eine verbesserte Leistungsverzweigung, vor allem im Bereich hoher Drehzahlen mit großer erforderlicher Massenbeschleunigung. Ein weiterer Vorteil sind kleine Zusatzbelastungen` z.B. auf Doppelschrägverzahnungen bei Ausgleich von Wärmedehnungen sowie keine Erhöhung der niedrigen Federsteife mit Zunahme der Betriebszeit.

Die hohe Elastizität der Membrankupplung der Doppelverzweigungsräder ermöglicht zudem durch den vergrößerten Abstand der Memhranscheiben voneinander und der dadurch erreichten Zweigelenkigkeit einen Ausgleich des entgegengesetzten Versatzes der Einzelräder unter den Tangentialkräften. Schrägstellungen der Einzelräder mit hohen Kantenbelastungen bei Verzahnung und Lager werden dadurch vorteilhafterweise vermieden. Die erforderliche Größe des Abstandes der Membranscheiben der Membrankupplung der Doppelverzweigungsräder richtet sich nach der Größe der vorhandenen Lagerspiele und dem Außendurchmesser der Membranscheiben.

Bei Membrankupplungen werden die dünnen Membranscheiben durch das Drehmoment, das an diesen von innen nach außen und umgekehrt übertragen wird, auf Verdrehung beansprucht. Die Höhe der sich daraus ergebenden Drehelastizität ist abhängig von der Größe der elastischen Membranfläche, den Membrandicken und der Anzahl der nacheinander angeordneten, summierend wirkenden Membranscheiben. Obwohl die damit erreichbare Drehelastizität relativ gering ist, reicht sie aus, die Verzahnungs- und Herstellungsfehler während des Betriebes auszugleichen und die Anordnung von mehr als drei Doppelverzweigungsrädern zuzulassen.

Die spielfrei laufenden Membrankupplungen ermöglichen darüber hinaus vorteilhafterweise höchste Auswuchtgüte. Weiterhin können mit der Membrankupplung starr verbundene Teile, wie beispielsweise Sonnenrad oder Einzelräder der Doppelverzweigungsräder komplett montiert als Baugruppe ausgewuchtet werden. Somit ist auch bei den höchsten Drehzahlen ein gutes, weitgehend schwingungsfreies Laufverhalten sichergestellt. Dadurch reduzieren sich auch die dynamischen Zusatzkräfte beispielsweise an den Verzahnungen, Lagern und Wellen beträchtlich.

Die statische Zahnkontakteinstellung vermeidet erfindungsgemäß in vorteilhafter Weise komplizierte und fehlerbehaftete Herstellungsmaßnahmen bei der Zuordnung der Teile der kompletten Doppelverzweigungsräder. So können diese, ohne auf Positionierungen zu achten, kostengünstiger gefertigt werden. Weiterhin erübrigen sich vorteilhafterweise kostspielige Demontagen, Nacharbeiten und Wiedermontagen.

Die axiale Führung der Getriebe-Radsätze durch die Antriebs- und Abtriebsmaschinen und die axialen Elastizitäten der Membrankupplungen erspart weiterhin die sonst üblichen Lagefixierungen. Die Führung in den Membrankupplungen begünstigt zudem die freie Selbsteinstellung der Radsätze auf eine getriebespezifische Betriebs-Mittellage und führt zu einem sehr hohen Grad von gleichmäßiger Leistungsverzweigung.

Die Getriebekonstruktion gemäß der vorliegenden Erfindung erlaubt darüber hinaus auch andere Führungsarten, falls besondere Gründe dies erforderlich machen. Zu diesem Zweck kann ein Doppel-Verzweigungsrad durch Abstandsscheiben zum Führungsrad ausgebildet werden. Außerdem können die Membrankupplungen erfindungsgemäß eine Federwegblockierung oder Federwegbegrenzung erhalten.

Es ergibt sich damit erfindungsgemäß ein völlig neues Verzweigungsgetriebe, das in der Lage ist, auch die zunehmend hohen Anforderungen zu erfüllen. Die Konstruktion eignet sich für alle bei derartigen Getrieben einsetzbaren Verzahnungsarten. Zudem auch für alle Arten von Verzweigungsgetrieben mit Doppelverzweigungsrädern.

Die erfindungsgemäßen Ausführungsformen der Verzweigungsgetriebe weisen im wesentlichen damit folgende Merkmale auf:

- Die in den Verzweigungsrädern einstellbar geführten Sonnenräder sind über ein- oder zweigelenkige Membrankupplungen mit den Wellen der An- und/oder Abtriebsmaschine verbunden.
- Die Einzelräder der Doppelverzweigungsräder sind über Membrankupplungen miteinander verbunden.
- Die axiale Führung der Getrieberadsätze erfolgt durch die selbständig axial geführten An- und Abtriebsmaschinen und die axialen Elastizitäten der Membrankupplungen.
- Die Membrankupplung der Doppelverzweigungsräder besitzt zwei oder mehrere Membranscheiben.
- Die Drehmomentübertragung bei der Membrankupplung der Doppelverzweigungsräder erfolgt beidseitig vorwiegend über Schrauben mittels Reibschluß. Bei Stillstand erfolgt die Einstellung auf vollständigen Zahnkontakt durch Schraubenverbindung und Langlöcher bei den größeren Einzelrädern.
- Die Größe der Langlöcher ist gleich oder größer als der doppelte erforderliche Einstellwinkel, wobei dieser der halben Zahnteilung im Stirnschnitt des Einstellzahnrades entspricht.

- Die axiale Führung der Getrieberadsätze erfolgt alternativ durch die Antriebs- und/oder Abtriebsmaschine und die dieser zugeordneten Membrankupplung mit axialer Federwegblockierung.

- Die axiale Führung der Getrieberadsätze erfolgt alternativ an nur einem Doppelverzweigungsrad durch Abstandsscheiben.

- Die axiale Führung der Antriebs- und/oder der Abtriebsmaschine erfolgt an nur einem Doppelverzweigungsrad durch Abstandsscheiben sowie an der Antriebs- und/oder Abtriebsmembrankupplung durch axiale Federwegblockierung.

- Für den Ausgleich von Wärmedehnungen der Antriebs- und/oder der Abtriebsmaschinenwelle durch Membrankupplungen sind diese, abhängig von den axialen Steifigkeiten, mit unterschiedlichen Federwegbegrenzungen ausgestattet.

- Zur Erhöhung der Steifigkeit bei axialen Einstellungsbewegungen der Räder sind die Membrankupplungen vorgespannt montiert, beispielsweise gedrückt oder gezogen.

Die Merkmale der Erfindung sind auch bei allen anderen Arten von Verzweigungsgetrieben mit Doppelverzweigungsrädern anwendbar. Es besteht auch die Möglichkeit der Anwendung der Erfindung bei Verzweigungsgetrieben mit Geradverzahnung.

Die Erfindung wird nachfolgend anhand von in der Zeichnung dargestellten Ausführungsbeispielen näher beschrieben. In der Zeichnung zeigen:

Fig. 1 einen Längsschnitt durch ein Verzweigungsgetriebe mit Doppelschrägverzahnung;

Fig. 2 die Zuordnung der Verzahnungen bei Doppelverzweigungsrädern;

Fig. 3 die Ausbildung der Drehmomentübertragung an dem größeren Einzelrad der Doppelverzweigungsräder gemäß Ausschnitt Z nach Fig. 1;

Fig. 4 die Ausbildung der Langlöcher gemäß dem Schnitt IV-IV nach Fig. 3;

Fig. 5 einen Längsschnitt durch ein Verzweigungsgetriebe mit Einfachschrägverzahnung und Druckkämmen;

Fig. 6 einen Längsschnitt durch ein Verzweigungsgetriebe mit axial geführtem Doppelverzweigungsrad und Sonnenrad-Membrankupplung mit axialer Federwegblockierung;

Fig. 7 die Sonnenrad-Membrankupplung des Getriebes nach Fig. 6, jedoch mit axialer Federwegbegrenzung;

Fig. 8 einen Längsschnitt durch ein Verzweigungsgetriebe mit Geradverzahnung und einseitig im Gehäusedeckel befestigten Lagerbolzen für die Einzelräder;

Fig. 9 die Seitenansicht des Getriebes der Fig. 8 gemäß Schnitt IX-IX;

Fig.10 einen Längsschnitt durch das Verzweigungsgetriebe nach Fig.8 mit je einem Lager an den Sonnenrädern.

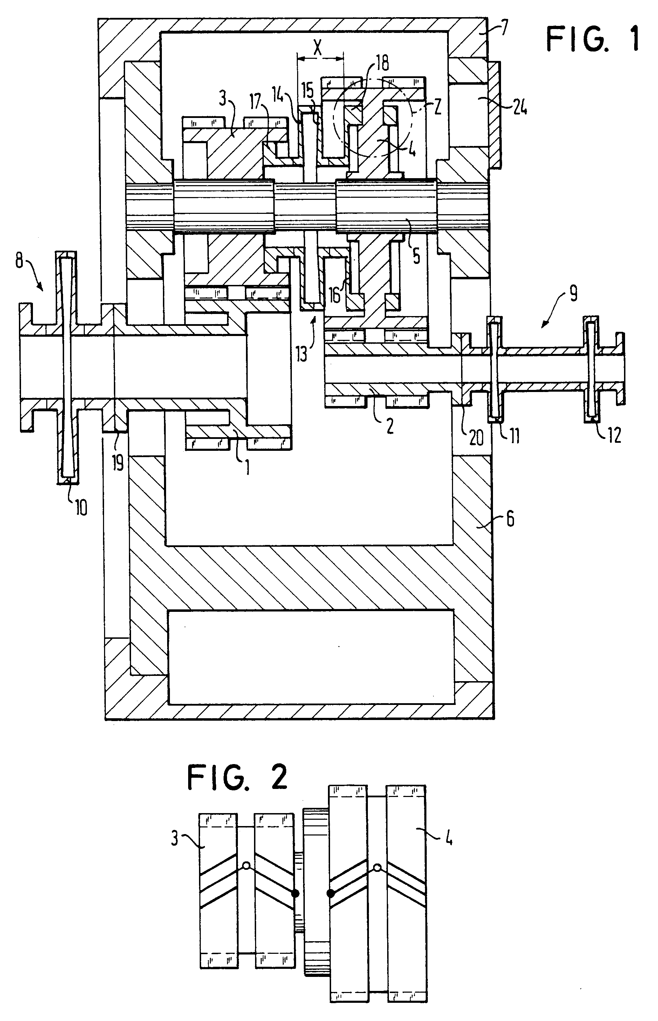

Gemäß Fig. 1 besitzt das Verzweigungsgetriebe als Sonnenräder definierte Antriebs- und Abtriebszahnräder 1, 2, die jeweils in drei oder mehr am Umfang gleichmäßig verteilt angeordneten Einzelrädern 3 bzw. 4 (Doppelverzweigungsräder) einstellbar geführt sind. Diese Einzelräder 3, 4 sind auf Bolzen 5 drehbar gelagert. Die Bolzen ihrerseits sind in einem Steg 6 befestigt, welcher von einem Gehäuse 7 umschlossen ist.

Als flexible Verbindung zu nicht näher dargestellten Antriebs- und Abtriebsmaschinen bzw. zu deren Wellen sind bei den Sonnenrädern 1 und 2 erfindungsgemäß Membrankupplungen 8 und 9 angeordnet. Hierbei besitzt die Membrankupplung 8 beispielsweise nur ein flexibles Gelenk 10, wohingegen die Membrankupplung 9 beispielsweise zwei Gelenke 11 und 12 aufweist.

Zwischen den beiden Einzelrädern 3 und 4 befindet sich als flexible Verbindung dieser beiden Räder eine Membrankupplung 13, welche beispielsweise aus drei Membranscheiben 14, 15 und 16 besteht. Die Membrankupplung 13 ist über je einen Flansch 17 und 18 über Schraubenverbindungen mit den Einzelrädern 3 bzw.4 verbunden.

Die axiale Führung der Radsätze 1, 3 bzw. 2, 4 erfolgt bei der Ausführungsform nach Fig. 1 durch die selbständig axial geführten An- und Abtriebsmaschinen und die axialen Elastizitäten der vorgenannten Membrankupplung 8 bzw. 9 und 13.

Aus Fig. 1 geht darüber hinaus als Beispiel der Anbau der Membrankupplungen 8 und 9 an die Sonnenräder 1 bzw. 2 über verschraubte Flansche 19 und 20 hervor. Alternativ zu dieser trennbaren Anordnung können die Membrankupplungen 8 und 9 auch untrennbar mit den entsprechenden Sonnenrädern 1 und 2 beispielsweise über Elektronenstrahlschweißung verbunden sein.

Fig. 2 zeigt die erforderliche Übereinstimmung der Lage der Verzahnungen bei drei oder mehr Doppelverzweigungsrädern. Diese Übereinstimmung wird bei den vorbekannten Bauarten durch Herstellungsmaßnahmen nur ungenau und durch statisches Einstellen nur für eine Zahnstellung erreicht.

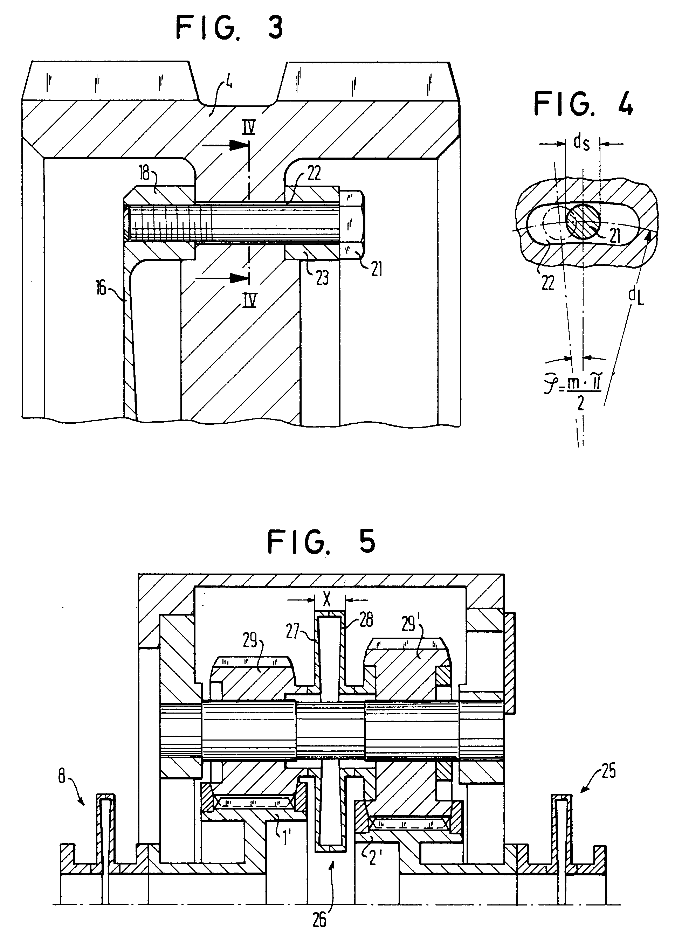

Fig. 3 zeigt die auf gleichmäßigen Zahnkontakt einstellbare Schraubenverbindung an dem größeren Einzelrad 4. Die Übertragung des Drehmomentes von dem Einzelrad 4 auf die Membranscheibe 16 erfolgt hierbei mittels Reibschluß durch Schrauben 21, welche gewichtsgleichmäßig aussortiert sein können. Die Einstellung der genauen Winkellage wird durch die im Einzelrad 4 angebrachten Langlöcher 22 ermöglicht, wobei ein Ring 23 zur Abdeckung dieser Langlöcher 22 und als Auflage für die Köpfe der Schrauben 21 dient.

Fig. 4 stellt einen Schnitt IV-IV aus Fig. 3 dar und bildet die Auslegungsrichtlinie für die Länge des Langloches 22. Demnach errechnet sich diese Länge entlang des Schraubenlochkreises $d_L$:

$$L > 2\,\hat{\phi} + d_s > m \cdot \pi + d_s.$$

Darin sind:

m       der Modul der Verzahnung des Einstell-Einzelrades 4 im Stirnschnitt

$d_s$       der Schraubenschaftdurchmesser.

Die im Stillstand auszuführende Einstellung auf vollständigen Zahnkontakt wird wie folgt durchgeführt:
Zunächst Einbau der Radsätze nach Fig. 1 in vertikaler Stellung ohne Gehäuse 7 in den Steg 6, wobei die Schrauben 21 an einem Einzelrad 4 mit dem erforderlichen Betriebs-Anzugsmoment, bei allen anderen Einzelrädern 4 nur schwach angezogen sind. In diesem Zustand lassen sich alle Doppelverzweigungsräder durch Drehung in den Langlöchern 22 mit den Sonnenrädern 1 und 2 in Zahneingriff bringen.

Die Zahnkontakt-Einstellung erfolgt durch zusätzliches Drehen der Einstell-Einzelräder 4 in Lastrichtung. Dabei ist es notwendig, das Sonnenrad 1 festzuhalten. Zur Verbesserung der Einstellgenauigkeit können darüber hinaus die Sonnenräder 1 und 2 durch einfache Vorrichtungen in ihrer Betriebslage radial und axial fixiert werden.

Nach dem Einstellen werden alle Schrauben 21, unter Benutzung von Öffnungen 24 im Steg 6 mit dem Betriebs-Anzugsmoment angezogen. Danach kann der Steg 6 in das Gehäuse 7 eingebaut und das Getriebe in Betrieb genommen werden.

Der besondere Vorteil dieser erfindungsgemäßen Bauart gemäß Fig. 1 besteht in der einfachen Herstellung der Radsatzteile. Dabei ist es nicht erforderlich, weder bei den Verzahnungen noch bei den Schrauenverbindungen der Flansche 17 und 18 auf gegenseitiges Zuordnen der Teile zu achten. Auch bedarf es nach dem Einstellen keiner Demontage, Nacharbeit an Teilen und Wiedermontage.

Fig. 5 zeigt eine Ausführungsform der Erfindung mit Einfachschrägverzahnung und Druckkämmen zum Ausgleich der axialen Zahnkräfte. Im Gegensatz zu der Ausführungsform nach Fig. 1 ist hier eine Membrankupplung 25 nur eingelenkig ausgeführt. Eine weitere Membrankupplung 26 besteht aus nur zwei Membranscheiben 27 und 28, wobei die Membranscheibe 27 untrennbar, z.B.

mittels Elektronenstrahlschweißung, mit dem Einzelrad 29 verbunden ist, während die Verbindung mit dem anderen Einzelrad 29' über Verschraubungen im vorgenannten Sinne erfolgt. Die andere Membrankupplung 8 an dem Antriebs- bzw. Abtriebsrad ist wiederum analog der Bauform nach Fig. 1 eingelenkig ausgebildet.

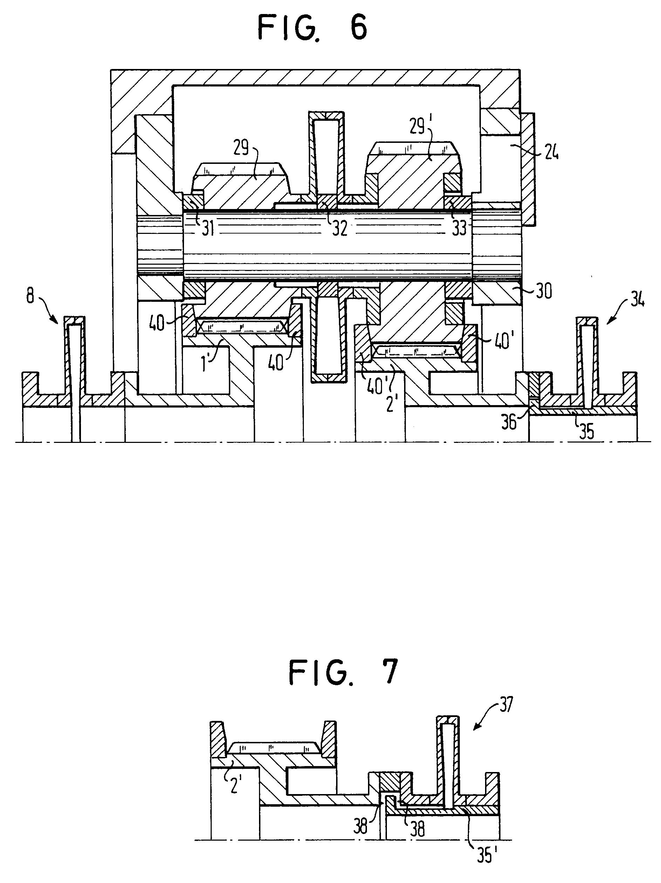

Fig. 6 stellt ein Getriebe ähnlich dem nach Fig. 5 dar, jedoch mit einem im Steg 30 axial über Abstandsscheiben 31, 32 und 33 mit geringem Spiel geführtem Doppelverzweigungsrad. Alle anderen Doppelverzweigungsräder werden axial ausschließlich durch Druckkämme 40, 40' der Sonnenräder 1' bzw. 2' geführt.

Eine an dem Sonnenrad 2' angeordnete Membrankupplung 34 besitzt eine axiale Federwegblockierung 35. Um hierbei eine Winkelauslenkung des Gelenks dieser Membrankupplung 34 zu ermöglichen, ist ein Bund 36 beidseitig mit geringem Spiel an die entsprechende Flanschverbindung eingepaßt.

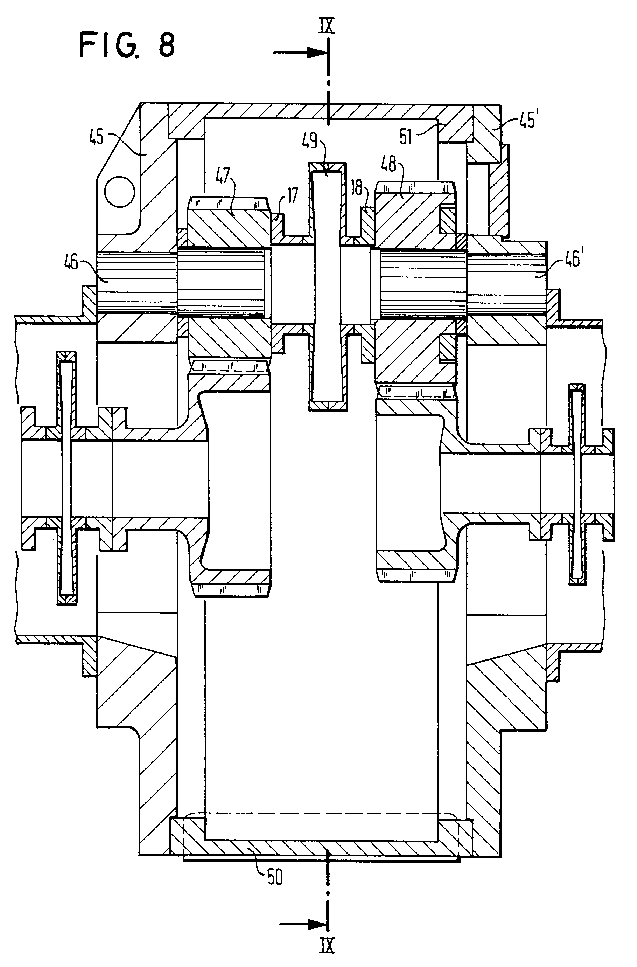

Fig. 7 stellt eine Membrankupplung 37 dar, wie sie an das Sonnenrad 2' montiert ist. Hierbei findet eine axiale Federwegbegrenzung im Gegensatz zu der Ausführungsform nach Fig. 6 Anwendung. Sie unterscheidet sich durch größeres beidseitiges Spiel 38. Die Größe dieses Spiels 38 richtet sich nach dem zumutbaren Federweg, nach der Höhe der zu erwartenden Wärmedehnung der angeschlossenen, nicht näher dargestellten Maschinenwelle und den Steifigkeiten, d.h., zumutbaren Federwegen der anderen, zum Dehnungsausgleich mit herangezogenen Membrankupplungen.

Insgesamt wird durch den Einsatz von Membrankupplungen bei einem Verzweigungsgetriebe eine Konstruktion geschaffen, welche vorteilhafterweise bei einfacher Bauform und kostensparender Gestaltung auch großen Leistungen und hohen Drehzahlen gerecht wird.

Fig. 8 zeigt eine Ausführungsform der Erfindung mit Geradverzahnung und einseitig im Gehäusedeckel 45, 45' befestigten Lagerbolzen 46, 46' für die Einzelräder 47, 48. Diese Art der Lagerbolzen-Befestigung ergibt einen einfachen und kostengünstigen Getriebeaufbau, mit dem weiteren Vorteil der einfachen Montage und Demontage der Membrankupplungen 49 und der Einzelräder 47, 48, beispielsweise bei Getriebeinspektionen oder Wartungsarbeiten. So ist es möglich, nach dem Lösen der Schraubenverbindungen an den Flaschen 17, 18 die Membrankupplung 49 auszubauen, die beiden Einzelräder 47, 48 nacheinander an die Stelle der entnommenen Membrankupplung 49 zu verschieben und anschließend herauszuheben.

Die Bauart nach Fig. 8 erfordert für den Ausbau dieser Teile demnach nicht den Ausbau der Lagerbolzen 46, 46', wie dies bei den Bauarten nach Fig. 1, 5 und 6 jedoch der Fall ist. Bei dieser Ausführungsform wird die Auslegungsforderung erfüllt: Die Länge der Membrankupplung 49 ist größer als die Länge der Einzelräder 47, 48.

Die Befestigung der Lagerbolzen 46, 46' in den Gehäusedeckeln 45, 45' gemäß Fig. 8 ersetzt zudem die herkömmliche, aufwendige Bauart des Steges 6 der Fig. 1, 5 und 6.

Die Bauart nach Fig. 8 ermöglicht außerdem den Ausbau von Teilen, ohne daß zuvor das Getriebe insgesamt aus der Anlage ausgebaut werden muß. Dies wird erreicht durch die Teilung des Gehäuses in ein Unterteil 50 mit Befestigungsfüßen und in ein Oberteil 51.

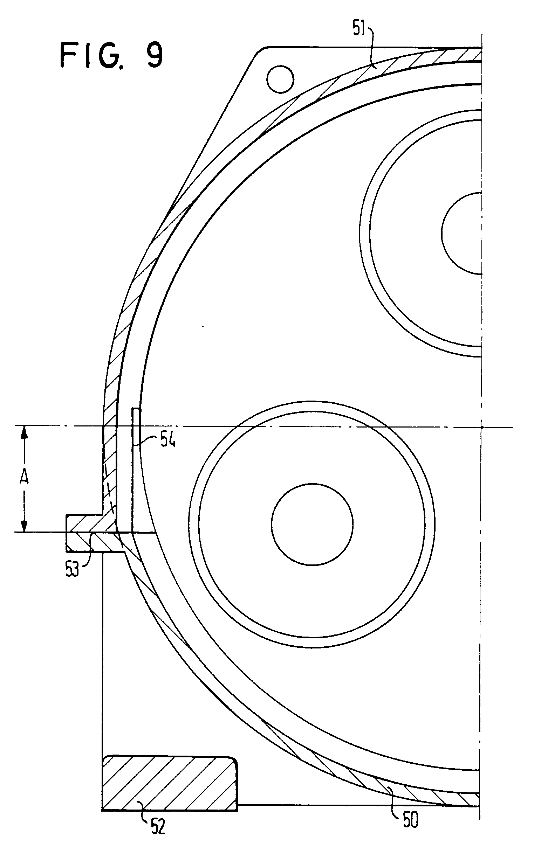

Fig. 9 zeigt den Seitenriß der Ausführungsform nach Fig. 8 gemäß Schnitt IX-IX mit der Gehäuseunterteilung in ein Unterteil 50 mit Befestigungsfüßen 52 und in ein Oberteil 51. Die horizontale Teilungsebene 53 ist gegenüber der üblichen Praxis aus der Rotationsachse um das Maß A nach unten verlegt. Damit erreicht man nach dem Abheben des Oberteils 51 eine bessere Zugänglichkeit zum Ausbau der beiden unteren Membrankupplungen bzw. Einzelräder. Das Abheben des Oberteils 51 wird trotz der Zentrierung in den Gehäusedeckeln 45, 45' durch die Ausnehmung gemäß der Kontur 54 ermöglicht.

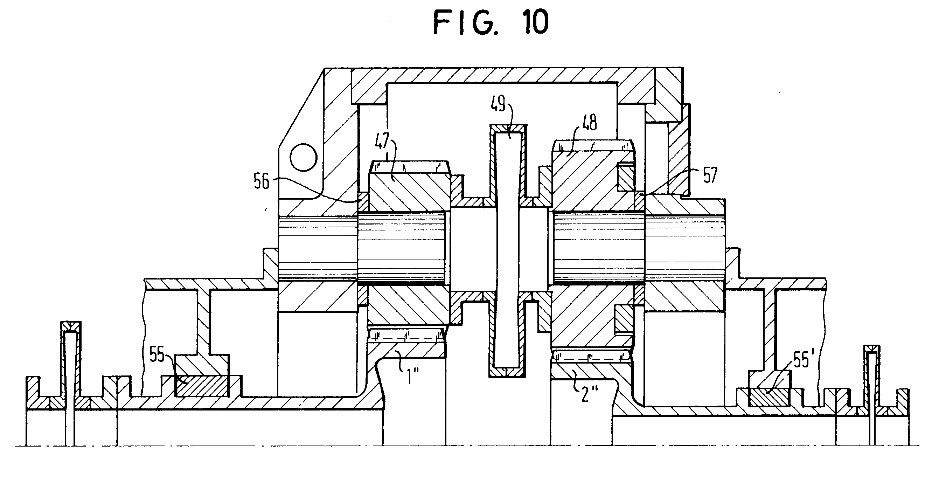

Fig. 10 zeigt eine Ausführungsform der Erfindung nach Fig. 8, jedoch mit je einem Lager 55, 55' an den Sonnenrädern 1'', 2''. Die zweite Lagerstelle für die Sonnenradwelle wird gebildet durch die Zahneingriffe des Sonnenrades 1'', 2'' mit den drei oder mehr Einzelrädern 47 bzw. 48. Die axiale Führung der Doppelverzweigungsräder erfolgt über die Abstandsscheiben 56, 57 und die Steifigkeit der Membrankupplung 49.

Die Bauarten gemäß Fig. 1 bis 10 erlauben vorteilhafter Weise bezüglich der einsetzbaren Lagerart - in Abhängigkeit von der Drehzahl - Gleit- oder Wälzlager.

**Patentansprüche**

1. Verzweigungsgetriebe, insbesondere für große Leistungen und/oder hohe Drehzahlen, mit je einem zentralen Sonnenrad, welche einerseits mit jeweils einer Welle einer An- und Abtriebsmaschine verbunden und andererseits über mindestens drei, gleichmäßig über den Umfang verteilte, durch eine Kupplung verbundene Doppelverzweigungsräder miteinander gekoppelt sind, dadurch gekennzeichnet, daß die Kupplung und die Verbindung mit der jeweiligen Welle der An- und Abtriebsmaschine jeweils als Membrankupplung (8, 9, 13; 25, 26; 34, 37) ausgebildet ist und daß die Membrankupplung (13; 26) zwischen den Einzelrädern (3, 4; 29, 29'; 47, 48) der Doppelverzweigungsräder mindestens zwei Membranscheiben (14, 15, 16; 27, 28) aufweist, wobei mindestens eine Membranscheibe über einen Flansch (17, 18) mit ihrem entsprechenden Einzelrad (3, 4; 29, 29'; 47, 48) verbunden ist.

2. Getriebe nach Anspruch 1, dadurch gekennzeichnet, daß die in den Einzelrädern (3, 4) der Doppelverzweigungsräder einstellbar geführten Sonnenräder (1, 2) über Flansche (19, 20) und die ein- oder zweigelenkig ausgebildeten Membrankupplungen (8, 9) mit den Wellen der An- und Abtriebsmaschine verbunden sind.

3. Getriebe nach Anspruch 2, dadurch gekennzeichnet, daß der jeweilige Flansch (19, 20) an das Sonnenrad (1, 2) angeschraubt oder mit diesem über Schweißung verbunden ist.

4. Getriebe nach Anspruch 3, dadurch gekennzeichnet, daß die Verbindung als Elektronenstrahlschweißung ausgeführt ist.

5. Getriebe nach Anspruch 1, dadurch gekennzeichnet, daß die Membranscheiben (14, 15, 16; 27, 28) über Flansche (17, 18) mit den Einzelrädern (3, 4) verbunden sind.

6. Getriebe nach Anspruch 1 bis 5, dadurch gekennzeichnet, daß eine Scheibe (16) der Membrankupplung (13) über den Flansch (18) und über einstellbare Schrauben (21) an dem einen Einzelrad (4) befestigt ist.

7. Getriebe nach Anspruch 6, dadurch gekennzeichnet, daß die Einstellbarkeit der Schrauben (21) über in dem Einzelrad (4) angeordnete Langlöcher (22) erfolgt.

8. Getriebe nach Anspruch 7, dadurch gekennzeichnet, daß die Größe des jeweiligen Langlochs (22) gleich oder größer als der doppelte Einstellwinkel ( $\phi$ ) ist.

9. Getriebe nach Anspruch 7 und 8, dadurch gekennzeichnet, daß die Langlöcher (22) durch einen das Einzelrad (4) beaufschlagenden Ring (23) abgedeckt sind, welcher Auflage für Köpfe der jeweiligen Schrauben (21) ist.

10. Getriebe nach Anspruch 1 bis 5, mit einfach schrägverzahnten Rädern und Druckkämmen, dadurch gekennzeichnet, daß eine der Membranscheiben (27) der zwischen den beiden Einzelrädern (29, 29') vorgesehenen Membrankupplung (26) mit zwei Membranscheiben (27, 28) untrennbar mit einem der Einzelräder (29) verbunden ist.

11. Getriebe nach einem der vorhergehenden Ansprüche, dadurch gekennzeichnet, daß die Radsätze (1, 3; 2, 4 bzw. 1', 29; 2', 29') in einem von einem Gehäuse (7) umschlossenen Steg (6; 30) angeordnet sind.

12. Getriebe nach Anspruch 7 und 11, dadurch gekennzeichnet, daß der Steg (6) Öffnungen (24) zur Einstellbarkeit der Schrauben (21) aufweist.

13. Getriebe nach Anspruch 11, dadurch gekennzeichnet daß ein über Abstandsscheiben (31, 32, 33) im Steg (30) geführtes Doppelverzweigungsrad vorgesehen ist.

14. Getriebe nach Anspruch 13, dadurch gekennzeichnet, daß die mit dem Sonnenrad (2') verbundene Membrankupplung (34) eine axiale Federwegblockierung (35) aufweist.

15. Getriebe nach Anspruch 13, dadurch gekennzeichnet, daß die mit dem Sonnenrad (2') verbundene Membrankupplung (37) eine axiale Federwegbegrenzung (35') mit beiderseitigem Spiel (38) aufweist.

16. Getriebe nach einem der vorhergehenden Ansprüche, dadurch gekennzeichnet, daß die Membrankupplungen (8, 9; 25; 34, 37) zwischen den Sonnenrädern und den diesen zugeordneten Wellen mit unterschiedlichen Federwegbegrenzungen versehen sind.

17. Getriebe nach einem der vorhergehenden Ansprüche, dadurch gekennzeichnet, daß die Membrankupplungen vorgespannt montiert sind.

18. Getriebe nach einem der vorstehenden Ansprüche, dadurch gekennzeichnet, daß die Einzelräder (47, 48) des Doppelverzweigungsrades auf getrennt ausgebildeten Bolzen (46, 46') gelagert sind und daß die Bolzen (46, 46') im Gehäusedeckel (45, 45') befestigt sind.

19. Getriebe nach Anspruch 18, dadurch gekennzeichnet, daß die beiden Einzelräder (47, 48) über die Flansche (17, 19) und die Membrankupplung (49) miteinander verbunden sind, wobei die Breite der Einzelräder (47, 48) kleiner als die Gesamtbreite der Baueinheit aus den Flanschen (17, 18) und der Membrankupplung (49) ist.

20. Getriebe nach Anspruch 18 und 19, dadurch gekennzeichnet, daß das Gehäuse zweiteilig ausgebildet ist und eine um ein Maß (A) gegenüber der Getriebeachse nach unten versetzte Teilungsebene (53) besitzt und daß das Oberteil (51) an der Zentrierfläche mit einer Ausnehmung (54) versehen ist.

21. Getriebe nach Anspruch 18 und 19, dadurch gekennzeichnet, daß die Sonnenräder (1", 2") radial-axial gelagert sind, wobei diese Lagerung durch das Radial-Axiallager (55, 55') und eine andere Lagerung durch den jeweiligen Zahneingriff der Sonnenräder (1", 2") mit den Einzelrädern (47, 48) gebildet ist.

**Claims**

1. A branching gear, in particular for high outputs and/or high revolutions, comprising a respective central sun pinion, which is on the one side connected to a respective shaft of a drive and output engine and on the other side interconnected via at least three double-branching wheels, which are peripherally evenly spaced and connected by a clutch, **characterized in that** the clutch and the connection to the respective shaft of the drive and output engine is structured as a diaphragm clutch (8, 9, 13; 25, 26; 34, 37) respectively, and that the diaphragm clutch (13; 26) comprises between the individual wheels (3, 4; 29, 29', 47, 48) of the double-branching wheels at least two diaphragm discs (14, 15, 16; 27, 28), and that at least one diaphragm disc is connected via a flange (17, 18) to its corresponding individual wheel (3, 4; 29, 29'; 47, 48).

2. A gear according to claim 1, **characterized in that** the sun pinions (1, 2), which are adjustably guided in the individual wheels (3, 4) of the double-branching wheels, are connected to the shafts of the drive and output engine via flanges (19, 20) and single- or double-hinged diaphragm clutches (8, 9).

3. A gear according to claim 2, **characterized in that** a respective flange (19, 20) is bolted to the sun pinion (1, 2) or connected thereto by way of welding.

4. A gear according to claim 3, **characterized in that** the connection is carried out by way of electron-beam welding.

5. A gear according to claim 1, **characterized in that** the diaphragm discs (14, 15, 16; 27, 28) are connected to the individual wheels (3, 4) via flanges (17, 18).

6. A gear according to claim 1 to 5, **characterized in that** a disc (16) of the diaphragm clutch (13) is attached to the one individual wheel (4) via the flange (18) and via adjustable bolts (21).

7. A gear according to claim 6, **characterized in that** the adjustability of the bolts (21) is by means of elongated holes (22) arranged in the individual wheel (4).

8. A gear according to claim 7, **characterized in that** the size of a respective elongated hole (22) is equal or greater than double the adjustment angle ($\phi$).

9. A gear according to claim 7 and 8, **characterized in that** the elongated holes (22) are covered by a ring (23), which loads the individual wheel (4) and serves as a seating for the heads of the respective bolts (21).

10. A gear according to claim 1 to 5 comprising transversely toothed wheels and pressure combs, **characterized in that** one of the diaphragm discs (27) of the diaphragm clutch (26) which is provided between the two individual wheels (29, 29') with two diaphragm discs (27, 28) is inseparably connected to one of the individual wheels (29).

11. A gear according to one of the above claims, **characterized in that** the wheel sets (1, 3; 2, 4 or 1', 29; 2', 29') are arranged in a web (6; 30) which is encased in a housing (7).

12. A gear according to claim 7 and 11, **characterized in that** the web (6) has openings (24) for adjustment of the bolts (21).

13. A gear according to claim 11, **characterized in that** a double-branching wheel is provided which is guided via spacers (31, 32, 33) in the web (30).

14. A gear according to claim 13, **characterized in that** the diaphragm clutch (34) which is connected to the sun pinion (2') comprises an axial spring-elongation barrier (35).

15. A gear according to claim 13, **characterized in that** the diaphragm clutch (37) which is connected to the sun pinion (2') comprises an axial spring-elongation barrier (35') with a play (38) on both sides.

16. A gear according to one of the above claims, **characterized in that** the diaphragm clutches (8, 9; 25; 34, 37) are provided with different spring-elongation barriers between the sun pinions and their associated shafts.

17. A gear according to one of the above claims, **characterized in that** the diaphragm clutches are pretensioned when fitted.

18. A gear according to one of the above claims, **characterized in that** the individual wheels (47, 48) of the double-branching wheel are mounted on separately formed bolts (46, 46'), and that the bolts (46, 46') are mounted in the housing cover (45, 45').

19. A gear according to claim 18, **characterized in that** the two individual wheels (47, 48) are interconnected via flanges (17, 19) and the diaphragm clutch (49), and that the width of the individual wheels (47, 48) is smaller than the overall width of the assembly unit comprising the flanges (17, 18) and of the diaphragm clutch (49).

20. A gear according to claim 18 and 19, **characterized in that** the housing is structured in two parts, comprising a separating plane (53) which is downwardly transposed relative to the gear axis by a dimension (A), and the top section (51) is provided with a recess (54) at the centring surface.

21. A gear according to claim 18 and 19, **characterized in that** the sun pinions (1'', 2'') are radial-axially mounted, and that this mounting is formed by the radial-axial bearing (55, 55') and another mounting by a respective tooth engagement of the run pinions (1'', 2'') with the individual wheels (47, 48).

**Revendications**

1. Transmission de répartition à engrenages, notamment pour puissances élevées et/ou vitesses de rotation élevées, comprenant, pour une machine motrice et une machine réceptrice, un planétaire central pour chaque machine, ces planétaires centraux étant d'une part reliés chacun à un arbre de la machine respective et d'autre part accouplés entre eux par l'intermédiaire d'au moins trois pignons doubles de répartition à distribution circonférentielle uniforme et réunis par un accouplement, caractérisée

en ce que l'accouplement et chacune des liaisons avec les arbres de la machine motrice et de la machine réceptrice sont réalisés chacun sous la forme d'un accouplement à diaphragme (8, 9, 13 ; 25, 26 ; 34, 37) et

en ce que l'accouplement à diaphragme (13 ; 26) situé entre les roues individuelles (3, 4 ; 29, 29' ; 47, 48) des pignons doubles de répartition comprend au moins deux disques formant diaphragme (14, 15, 16 ; 27, 28), au moins un disque formant diaphragme étant relié par l'intermédiaire d'une bride (17, 18) à la roue individuelle (3, 4 ; 29, 29' ; 47, 48) qui lui est associée.

2. Transmission selon la revendication 1, caractérisée en ce que les planétaires (1, 2), guidés d'une manière réglable dans les roues individuelles (3, 4) des pignons doubles de répartition, sont reliés aux arbres de la machine motrice et de la machine réceptrice par l'intermédiaire de brides (19, 20) et des accouplements à diaphragme (8, 9) réalisés avec une ou deux articulations.

3. Transmission selon la revendication 2, caractérisée en ce que chaque bride (19, 20) associée à un planétaire (1, 2) est fixée à ce planétaire au moyen de boulons ou en est rendue solidaire par soudage.

4. Transmission selon la revendication 3, caractérisée en ce que la solidarisation est réalisée par soudage par bombardement électronique.

5. Transmission selon la revendication 1, caractérisée en ce que les disques formant diaphragme (14, 15, 16 ; 27, 28) sont reliés aux roues individuelles (3, 4) par l'intermédiaire de brides (17, 18).

6. Transmission selon la revendication 1 à 5, caractérisée en ce qu'un disque (16) de l'accouplement à diaphragme (13) est fixé à l'une (4) des roues individuelles par l'intermédiaire de la bride (18) et par l'intermédiaire de boulons (21) à position réglable.

7. Transmission selon la revendication 6, caractérisée en ce que la possibilité de réglage de la position des boulons (21) est obtenue au moyen de lumières oblongues (22) ménagées dans la roue individuelle (4).

8. Transmission selon la revendication 7, caractérisée en ce que la dimension de chaque lumière oblongue (22) est égale ou supérieure au double de l'angle (f) de réglage de position.

9. Transmission selon la revendication 7 et 8, caractérisée en ce que les lumières oblongues (22) sont couvertes par un anneau (23) qui exerce son action sur la roue individuelle (4) et qui sert d'appui aux têtes des différents boulons (21).

10. Transmission selon la revendication 1 à 5, comportant des roues à simple denture hélicoïdale et des cames de pression, caractérisée en ce que l'un (27) des disques formant diaphragme de l'accouplement à diaphragme (26) prévu entre les deux roues individuelles (29, 29'), lequel accouplement comporte deux disques formant diaphragme (27, 28), est rendu directement solidaire de l'une (29) des roues individuelles.

11. Transmission selon l'une des revendications précédentes, caractérisée en ce que les paires de roues (1, 3 ; 2, 4 ou 1', 29 ; 2', 29') sont disposées dans une pièce transversale (6 ; 30) entourée par un boîtier (7).

12. Transmission selon la revendication 7 et 11, caractérisée en ce que la pièce transversale (6) comporte des ouvertures (24) permettant le réglage de position des boulons (21).

13. Transmission selon la revendication 11, caractérisée en ce qu'il est prévu une roue double de répartition guidée dans la pièce transversale (30) par l'intermédiaire de disques-entretoises (31, 32, 33).

14. Transmission selon la revendication 13, caractérisée en ce que l'accouplement à diaphragme (34) solidaire du planétaire (2') comporte une butée axiale de course élastique (35).

15. Transmission selon la revendication 13, caractérisée en ce que l'accouplement à diaphragme (37) solidaire du planétaire (2') comprend une butée de limitation axiale de course élastique (35') comportant un jeu (38) des deux côtés.

16. Transmission selon l'une des revendications précédentes, caractérisée en ce que les accouplements à diaphragme (8, 9 ; 25 ; 34, 37) entre les planétaires et les arbres associés à ces dernières sont pourvus de butées de limitation de course élastique différentes.

17. Transmission selon l'une des revendications précédentes, caractérisée en ce que les accouplements à diaphragme sont montés avec une précontrainte.

**18.** Transmission selon l'une des revendications précédentes, caractérisée en ce que les roues individuelles (47, 48) du pignon double de répartition sont montées sur des axes (46, 46') réalisés d'une manière séparée et en ce que les axes (46, 46') sont fixés dans le couvercle de boîtier (45, 45').

**19.** Transmission selon la revendication 18, caractérisée en ce que les deux roues individuelles (47, 48) sont reliées entre elles par l'intermédiaire des brides (17, 19) et de l'accouplement à diaphragme (49), la largeur des roues individuelles (47, 48) étant inférieure à la largeur hors tout de l'unité structurelle formée des brides (17, 18) et de l'accouplement à diaphragme (49).

**20.** Transmission selon la revendication 18 et 19, caractérisée en ce que le boîtier est réalisé en deux parties et présente un plan de joint (53) décalé d'une distance (A) vers le bas vis-à-vis de l'axe de la transmission et en ce que la partie supérieure (51) est pourvue d'un évidement (54) à l'endroit de la surface de centrage.

**21.** Transmission selon la revendication 18 et 19, caractérisée en ce que chacun des planétaires (1'', 2'') fait l'objet d'un montage à palier radial-axial, un palier étant formé par le palier radial-axial (55, 55') et un autre palier par l'engrènement des planétaires (1'', 2'') avec les roues individuelles (47, 48) associées.

EP 0 459 352 B1

FIG. 1

FIG. 2

12

# FIG. 3

# FIG. 4

$$\widehat{\mathcal{P}} = \frac{m \cdot \widetilde{\pi}}{2}$$

# FIG. 5

# FIG. 6

# FIG. 7

FIG. 8

FIG. 9

FIG. 10